(19) Europäisches Patentamt
European Patent Office
Office européen des brevets

(11) **EP 2 866 288 B1**

(12) **EUROPÄISCHE PATENTSCHRIFT**

(45) Veröffentlichungstag und Bekanntmachung des Hinweises auf die Patenterteilung:
**18.04.2018   Patentblatt 2018/16**

(51) Int Cl.:
*H01M 8/0612* *(2016.01)*      *H01M 8/04089* *(2016.01)*
*H01M 8/0444* *(2016.01)*      *H01M 8/04492* *(2016.01)*

(21) Anmeldenummer: **14190211.4**

(22) Anmeldetag: **24.10.2014**

(54) **Brennstoffzellenvorrichtung**

Fuel cell apparatus

Dispositif à pile à combustible

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2013   DE 102013221618**

(43) Veröffentlichungstag der Anmeldung:
**29.04.2015   Patentblatt 2015/18**

(73) Patentinhaber: **ROBERT BOSCH GMBH**
**70442 Stuttgart (DE)**

(72) Erfinder:
• **Gallet Segarra, Ana**
  **70197 Stuttgart (DE)**
• **Brandenburger, Ralf**
  **71672 Marbach (DE)**
• **Carre, Maxime**
  **70469 Stuttgart (DE)**

(56) Entgegenhaltungen:
**JP-A- 2005 285 692      JP-A- 2007 024 511**
**KR-A- 20110 016 151**

EP 2 866 288 B1

**Beschreibung**

Brennstoffzellenvorrichtung

Stand der Technik

Es ist bereits eine Brennstoffzellenvorrichtung mit zumindest einer Brennstoffzelleneinheit und mit zumindest einer Reformereinheit bekannt, welche zur Erzeugung zumindest eines Synthesegases unter Verwendung von Erdgas und zumindest einem weiteren Reaktanten, insbesondere Sauerstoff und/oder Wasserdampf, vorgesehen ist und welche über zumindest eine Fluidverbindung mit der zumindest einen Brennstoffzelleneinheit verbunden ist.

Dokument JP 2007 024511 A beschreibt zum Beispiel so eine Brennstoffzellenvorrichtung.

Offenbarung der Erfindung

Die Erfindung gemäß Anspruch 1 geht aus von einer Brennstoffzellenvorrichtung mit zumindest einer Brennstoffzelleneinheit und mit zumindest einer Reformereinheit, welche zur Erzeugung zumindest eines Synthesegases unter Verwendung von Erdgas und zumindest einem weiteren Reaktanten, insbesondere Sauerstoff und/oder Wasserdampf, vorgesehen ist und welche über zumindest eine Fluidverbindung mit der zumindest einen Brennstoffzelleneinheit verbunden ist. Die Brennstoffzellenvorrichtung umfasst zumindest eine Sensoreinheit, die dazu vorgesehen ist, in zumindest einem Betriebszustand zumindest eine Qualitätskenngröße des Erdgases zu erfassen. Dadurch kann eine besonders genaue Herstellung des zumindest einen Synthesegases unabhängig von einer Gaszusammensetzung eines der zwei Reaktanten erzielt werden. Vorteilhaft kann hierdurch eine Effizienz und eine Haltbarkeit der Brennstoffzelleneinheit optimiert werden. Unter einer "Brennstoffzellenvorrichtung" soll in diesem Zusammenhang insbesondere eine Vorrichtung zu einer stationären und/oder mobilen Gewinnung insbesondere elektrischer und/oder thermischer Energie unter Verwendung zumindest einer Brennstoffzelleneinheit verstanden werden. Unter einer "Brennstoffzelleneinheit" soll in diesem Zusammenhang insbesondere eine Einheit mit zumindest einer Brennstoffzelle verstanden werden, welche dazu vorgesehen ist, zumindest eine chemische Reaktionsenergie zumindest eines, insbesondere kontinuierlich zugeführten, Brenngases, insbesondere Wasserstoff und/oder Kohlenstoffmonoxid, und zumindest eines Oxidationsmittels, insbesondere Sauerstoff, insbesondere in elektrische Energie umzuwandeln. Die zumindest eine Brennstoffzelle kann insbesondere als Festoxid-Brennstoffzelle (SOFC) und/oder als Polymerelektrolyt-Brennstoffzelle (PEMFC) ausgebildet sein. Vorzugsweise umfasst die zumindest eine Brennstoffzelleneinheit eine Vielzahl von Brennstoffzellen, welche insbesondere in einem Brennstoffzellenstack angeordnet sind. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Reformereinheit" soll in diesem Zusammenhang insbesondere eine chemisch-technische Einheit zu zumindest einer Aufbereitung zumindest eines Kraftstoffs, insbesondere durch eine Dampfreformierung und/oder durch eine partielle Oxidation und/oder durch eine autotherme Reformierung, insbesondere zur Gewinnung des zumindest einen Synthesegases, verstanden werden. Unter einem "Reaktanten" soll in diesem Zusammenhang insbesondere ein chemischer Stoff und/oder ein chemisches Stoffgemisch verstanden werden, welcher und/oder welches insbesondere zu einer Verwerdung bei einer chemischen Reaktion, insbesondere zur Gewinnung des zumindest einen Synthesegases, vorgesehen ist. Unter einem "Synthesegas" soll in diesem Zusammenhang insbesondere ein brenngashaltiges Gasgemisch verstanden werden, welches insbesondere zu einer Verwendung in einem Syntheseprozess, insbesondere innerhalb der zumindest einen Brennstoffzelleneinheit, vorgesehen ist. Insbesondere handelt es sich bei dem zumindest einen Synthesegas um ein wasserstoffhaltiges und/oder kohlenstoffmonoxidhaltiges Gasgemisch. Insbesondere ist das zumindest eine Synthesegas zur Synthese von Wasser und/oder Kohlenstoffdioxid innerhalb der zumindest einen Brennstoffzelleneinheit vorgesehen. Unter einem "Erdgas" soll in diesem Zusammenhang insbesondere ein Gas und/oder ein Gasgemisch, insbesondere ein Naturgasgemisch verstanden werden, welches zumindest ein Alkan, insbesondere Methan, Ethan, Propan und/oder Butan umfasst. Ferner kann das Erdgas weitere Bestandteile aufweisen, wie insbesondere Kohlenstoffdioxid, Stickstoff und/oder Sauerstoff. Die Zusammensetzung des Erdgases aus den verschiedenen Alkanen und weiteren Bestandteilen kann dabei stark variieren. Unter einer "Fluidverbindung" soll in diesem Zusammenhang insbesondere eine Verbindung verstanden werden, die zu einem Transport von insbesondere flüssigen und/oder gasförmigen Stoffen und/oder Stoffgemischen vorgesehen ist. Insbesondere umfasst die zumindest eine Fluidverbindung zumindest eine Hohlleitung, beispielsweise zumindest eine Rohr- und/oder Schlauchleitung. Insbesondere ist die zumindest eine Fluidverbindung dazu vorgesehen, der zumindest einen Brennstoffzelleneinheit das zumindest eine Synthesegas von der zumindest einen Reformereinheit zuzuleiten. Unter einer "Sensoreinheit" soll in diesem Zusammenhang insbesondere eine Einheit verstanden werden, welche dazu vorgesehen ist, insbesondere physikalische und/oder chemische Eigenschaften und/oder die stoffliche Beschaffenheit ihrer Umgebung qualitativ und/oder als Messgröße quantitativ zu erfassen. Unter einer "Qualitätskenngröße des Erdgases" soll in diesem Zusammenhang insbesondere zumindest eine Eigenschaft verstanden werden, die Rückschlüsse auf eine Erdgasqualität, insbesondere auf einen Energiegehalt des Erdgases, zulässt. Insbesondere steht die Qualitätskenngröße des Erdgases in direktem Zusammenhang mit einer durchschnittlichen Anzahl potentiell freigebbarer Elektronen pro Gasmolekül. Insbesondere weicht die Qualitätskenngröße von einem reinen Wasserdampfanteil ab.

In einer weiteren Ausgestaltung der Erfindung wird vorgeschlagen, dass die zumindest eine Sensoreinheit dazu vorgesehen ist, zumindest einen Brennwert des Erdgases zu erfassen, wodurch auf besonders einfache Weise eine Qualitätskenngröße zur Bestimmung der Erdgasqualität erfasst werden kann. Vorteilhaft weist die Sensoreinheit zumindest einen Brennwertsensor auf.

Des Weiteren wird vorgeschlagen, dass die zumindest eine Sensoreinheit dazu vorgesehen ist, zumindest einen Sauerstoffanteil in einem Verbrennungsabgas des Erdgases zu erfassen, wodurch auf besonders einfache Weise eine Qualitätskenngröße zur Bestimmung der Erdgasqualität erfasst werden kann. Unter einem "Verbrennungsabgas" soll in diesem Zusammenhang insbesondere ein Abgas aus einem Verbrennungsvorgang verstanden werden. Dadurch kann auf einfache Weise eine Qualitätskenngröße zur Bestimmung der Erdgasqualität erfasst werden. Eine besonders kostengünstige Ausführung kann erzielt werden, wenn die Sensoreinheit zumindest einen Sauerstoffsensor umfasst. Bevorzugt ist der Sauerstoffsensor von einer Lambdasonde gebildet.

Ferner wird vorgeschlagen, dass die zumindest eine Sensoreinheit dazu vorgesehen ist, zumindest einen Kohlenstoffdioxidanteil in einem Verbrennungsabgas des Erdgases zu erfassen. Zusätzlich wird vorgeschlagen, dass die zumindest eine Sensoreinheit dazu vorgesehen ist, zumindest eine relative Feuchtigkeit in einem Verbrennungsabgas des Erdgases zu erfassen. Dadurch kann auf einfache Weise eine Qualitätskenngröße zur Bestimmung der Erdgasqualität erfasst werden.

Eine lange Lebensdauer des Systems kann erzielt werden, wenn die Brennstoffzellenvorrichtung zumindest eine Steuer- und/oder Regeleinheit aufweist, die dazu vorgesehen ist, ein Sauerstoff-Kohlenstoff-Verhältnis innerhalb der zumindest einen Reformereinheit in Abhängigkeit der Qualitätskenngröße des Erdgases einzustellen. Die Brennstoffzellenvorrichtung umfasst zumindest eine Abgasrückführung, die dazu vorgesehen ist, Abgas zur Vermischung mit dem Erdgas zurückzuführen. Somit kann ein besonders hoher Wirkungsgrad der Brennstoffzelleneinheit erreicht werden. Die Brennstoffzellenvorrichtung umfasst zumindest eine Steuer- und/oder Regeleinheit, die dazu vorgesehen ist, ein Mischungsverhältnis zwischen dem Abgas und dem Erdgas in Abhängigkeit der Qualitätskenngröße des Erdgases einzustellen. Somit kann ein besonders effizienter Betrieb der Brennstoffzelleneinheit erreicht werden. Die Erfindung gemäß Anspruch 8 beschreibt ein Verfahren zum Betrieb einer Brennstoffzellenvorrichtung mit zumindest einer Brennstoffzelleneinheit, wobei die Reformereinheit und/oder die Brennstoffzelleneinheit in Abhängigkeit von einer erfassten Qualitätskenngröße eines verwendeten Erdgases betrieben wird. Dadurch kann unabhängig von einer Erdgaszusammensetzung eine lange Lebensdauer und ein besonders effizienter Betrieb der Brennstoffzellenvorrichtung erzielt werden. Bevorzugt wird die Qualitätskenngröße kontinuierlich und/oder zyklisch erfasst. Unter "zyklisch" soll in diesem Zusammenhang insbesondere mehrmals innerhalb eines bestimmten Zeitraums, insbesondere mehrmals innerhalb eines Tages, bevorzugt mehrmals innerhalb einer Stunde, besonders bevorzugt mehrmals innerhalb einer Minute, ganz besonders bevorzugt mehrmals innerhalb einer Sekunde verstanden werden.

Die erfindungsgemäße Brennstoffzellenvorrichtung soll hierbei nicht auf die oben beschriebene Anwendung und Ausführungsform beschränkt sein. Insbesondere kann die erfindungsgemäße Brennstoffzellenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1    eine schematische Darstellung einer erfindungsgemäßen Brennstoffzellenvorrichtung,
Fig. 2    eine schematische Darstellung eines weiteren Ausführungsbeispiels einer erfindungsgemäßen Brennstoffzellenvorrichtung und
Fig. 3    eine schematische Darstellung eines weiteren Ausführungsbeispiels einer erfindungsgemäßen Brennstoffzellenvorrichtung.

Beschreibung der Ausführungsbeispiele

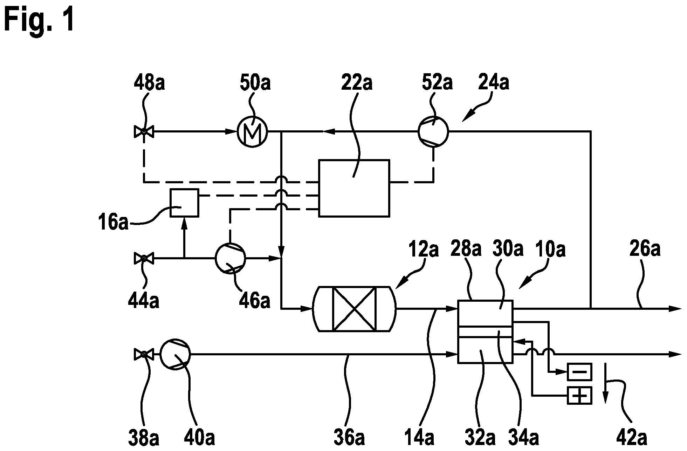

Die Figur 1 zeigt eine schematische Darstellung einer erfindungsgemäßen Brennstoffzellenvorrichtung mit einer Brennstoffzelleneinheit 10a und einer Reformereinheit 12a. Die Brennstoffzelleneinheit 10a weist zumindest eine Brennstoffzelle 28a zu einer Erzeugung elektrischer Energie auf. Alternativ ist es jedoch auch denkbar, dass die Brennstoffzelleneinheit eine Vielzahl an Brennstoffzellen aufweist, die ein Brennstoffzellenstack bilden. Alternativ ist es jedoch auch denkbar, dass die Brennstoffzelleneinheit eine Vielzahl an Brennstoffzellenstacks aufweist. Die Brennstoffzelle 28a ist vorzugsweise als Festoxid-Brennstoffzelle ausgeführt. Alternativ ist jedoch auch eine Verwendung einer Polymerelektrolyt-Brennstoffzelle denkbar. Die Brennstoffzelle 28a weist eine Anode 30a und eine Kathode 32a auf. Zwischen der Anode 30a und der Kathode 32a ist ein Elektrolyt 34a angeordnet. Die Anode 30a ist von der Kathode 32a durch den Elektrolyten 34a getrennt.

Der Kathode 32a der Brennstoffzelle 28a ist über eine Zuleitung 36a ein Oxidationsgas, insbesondere Luft oder Sauerstoff, zuführbar. Das Oxidationsgas wird über ein Ventil 38a eingeleitet und mittels eines Verdichters 40a komprimiert.

Zur Erzeugung elektrischer Energie bzw. einer elektrischen Spannung 42a ist es ferner notwendig, der Brennstoffzelle 28a an der Anode 30a ein Brenngas, insbesondere Wasserstoff und/oder bei Verwendung einer Festoxid-Brennstoffzelle auch Kohlenstoffmonoxid und/oder Methan, zuzuführen. Zur Erzeugung eines brenngashaltigen Synthesegases ist der Brennstoffzelleneinheit 10a die Reformereinheit 12a vorgeschaltet. Die Reformereinheit 12a ist über eine Fluidverbindung 14a mit der Brennstoffzelleneinheit 10a, insbesondere mit der Anode 30a der Brennstoffzelle 28a, verbunden. Die Fluidverbindung 14a umfasst dazu eine Rohrleitung.

Zur Erzeugung des brenngashaltigen Synthesegases wird der Reformereinheit 12a ein Gemisch aus Erdgas und einem weiteren Reaktanten, insbesondere Sauerstoff und/oder Wasserdampf zugeführt, welches durch eine Reformierung, hier durch eine Dampfreformierung, in das brenngashaltige Synthesegas überführt wird. Das Erdgas wird durch einen Verdichter 46a komprimiert. Dem Erdgas wird als weiterer Reaktant Wasser, insbesondere in Form von Wasserdampf, beigemischt. Dazu wird der weitere Reaktant über ein Ventil 48a eingeleitet und durch einen Verdampfer 50a zu Wasserdampf verdampft.

Die Brennstoffzellenvorrichtung weist ferner eine Abgasrückführung 24a auf. Die Abgasrückführung 24a ist dazu vorgesehen, Abgas 26a, insbesondere Anodenabgas, zumindest teilweise zur Vermischung mit dem Erdgas und dem weiteren Reaktanten zurückzuführen. Dazu weist die Abgasrückführung 24a einen Verdichter 52a auf, der zur Rückführung von Abgas 26a zur Reformereinheit 12a vorgesehen ist. Dadurch kann Wasserdampf aus einem Reaktionsvorgang in der Brennstoffzelle 28 zur Reformierung von Erdgas verwendet werden. Während der Reformierung werden langkettige Alkane komplett reformiert. Methan wird hingegen zu einem Teil in der Reformereinheit 12a und zu einem Teil in der Brennstoffzelleneinheit 10a reformiert. Ferner kann ungenutztes Synthesegas in die Brennstoffzelle zurückgeführt werden, was einen Brennstoffnutzungsgrad und somit eine Effizienz der Brennstoffzelle 28a erhöhen kann.

Die verschiedenen Alkane des Erdgases werden zusammen mit dem Wasserdampf in die Reformereinheit 14a geleitet und dort reformiert. Eine allgemeine Reaktionsgleichung für die Reformierung lautet:

$$C_nH_m + nH_2O \rightarrow nCO + \left(n + \frac{m}{2}\right)H_2$$

Der Formel ist zu entnehmen, dass das Gemisch aus Alkanen und Wasserdampf in ein kohlenstoffmonoxid- und wasserstoffhaltiges Synthesegas umgesetzt wird. Weitere mögliche Bestandteile des Erdgases, wie insbesondere Stickstoff, Sauerstoff und/oder Kohlenstoffdioxid können die Reformereinheit 14a ohne Reaktion passieren.

Je nach Zusammensetzung des Erdgases wird für eine optimierte Reformierung eine unterschiedliche Wasserdampfmenge benötigt. Ebenso ist die Konzentration von Kohlenstoffmonoxid und Wasserstoff im Synthesegas abhängig von der Zusammensetzung des verwendeten Erdgases. Die Qualität des verwendeten Erdgases lässt sich an einer mittleren Anzahl Elektronen pro Molekül im Erdgas messen, die nach einer Reformierung in der Brennstoffzelle 28a theoretisch maximal freigegeben werden kann. Diese mittlere Anzahl potentiell freigebbarer Elektronen pro Molekül im Erdgas hängt zusammen mit einer Energiedichte des verwendeten Erdgases. Um eine Reformierung und einen Betrieb der Brennstoffzelle 28a optimal zu betreiben, ist eine Kenntnis der mittleren Anzahl freigebbarer Elektronen im Erdgas erforderlich. Die mittlere Anzahl freigebbarer Elektronen pro Molekül im Erdgas kann durch Kenntnis der genauen Erdgaszusammensetzung ermittelt werden. Es ist prinzipiell denkbar, einen aufwändigen Sensor zur Erfassung der Erdgaszusammensetzung vorzusehen. Einfacher und kostengünstiger ist jedoch eine indirekte Erfassung der mittleren Anzahl freigebbarer Elektronen pro Molekül im Erdgas über eine weitere Qualitätskenngröße.

Wie dargestellt, weist die Brennstoffzellenvorrichtung eine Sensoreinheit 16a auf. Die Sensoreinheit 16a ist dazu vorgesehen, in einem Betriebszustand eine Qualitätskenngröße des Erdgases zu erfassen. Im gezeigten Ausführungsbeispiel beschreibt die Qualitätskenngröße einen Brennwert des Erdgases. Die Sensoreinheit 16a ist also dazu vorgesehen, einen Brennwert des Erdgases zu erfassen. Die Erfassung kann direkt mit einem Brennwertsensor erfolgen oder durch eine Analyse eines Verbrennungsvorgangs des Erdgases. Die Erfassung des Brennwerts kann vergleichsweise einfach und kostengünstig erfolgen.

Ein Zusammenhang zwischen dem Brennwert des Erdgases und der mittleren Anzahl freigebbarer Elektronen pro Molekül im Erdgas kann wie folgt beschrieben werden:

$$\overline{N}_{e^-}^{NG} = 6 \cdot \left( \frac{\Delta H_i^{NG} - 2 \cdot D_0^{H-O} + \frac{1}{2} \cdot D_0^{O=O} - D_0^{C-C} + 2 \cdot D_0^{C-H}}{2 \cdot D_0^{C=O} + 2 \cdot D_0^{H-O} - \frac{3}{2} \cdot D_0^{O=O} - D_0^{C-C} - 2 \cdot D_0^{C-H}} \right) + 2x_{Alk}$$

Dabei beschreibt $\overline{N}_{e^-}^{NG}$ die mittlere Anzahl freigebbarer Elektronen pro Molekül, die im Erdgas festgelegt ist. $x_{Alk}$ ist die Summe aller Stoffmengenanteile der Alkane im Erdgas. Dabei ist $x_{Alk}$ ein fest einstellbarer Parameter. Besteht das Erdgas ausschließlich aus Alkanen, beträgt $x_{Alk}$ den Wert 1. Ferner beschreibt $\Delta H_i$ den Brennwert des Erdgases.

$D_0^{A-B}$ beschreibt die Bindungsenergie zwischen einem ersten Atom A und einem zweiten Atom B. Das Erdgas weist lediglich fünf relevante Bindungsenergien zwischen Atomen auf, nämlich die Bindungsenergie zwischen einem Wasserstoffatom und einem Sauerstoffatom (H-O), die Bindungsenergie zwischen zwei Sauerstoffatomen (O=O), die Bindungsenergie zwischen zwei Kohlenstoffatomen (C-C), die Bindungsenergie zwischen einem Kohlenstoffatom und einem Wasserstoffatom (C-H) und die Bindungsenergie zwischen einem Kohlenstoffatom und einem Sauerstoffatom (C=O). Diese Bindungsenergien sind bekannt und weisen folgende Werte auf:

| Chemische Bindung | C-H | C-C | O=O | C=O | H-O |
|---|---|---|---|---|---|
| $D_0$ (kJ*mol$^{-1}$) | 413,2 | 345,8 | 497,8 | 803,9 | 463,1 |

Es lässt sich also ein direkter Zusammenhang zwischen dem Brennwert des Erdgases und der mittleren Anzahl freigebbarer Elektronen pro Molekül im Erdgas bestimmen. Eine Analyse der Zusammensetzung des Erdgases kann vorteilhaft vermieden werden.

Die Brennstoffzellenvorrichtung weist eine Steuer- und/oder Regeleinheit 22a auf. Die Steuer- und/oder Regeleinheit 22a ist dazu vorgesehen, ein Sauerstoff-Kohlenstoff-Verhältnis innerhalb der Reformereinheit 12a in Abhängigkeit der Qualitätskenngröße des Erdgases einzustellen. In diesem Fall ist die Steuer- und/oder Regeleinheit 22a dazu vorgesehen, ein Sauerstoff-Kohlenstoff-Verhältnis innerhalb der Reformereinheit 12a in Abhängigkeit vom Brennwert des Erdgases einzustellen. Die Steuer- und/oder Regeleinheit 22a führt dazu zyklische Berechnungen der mittleren Anzahl freigebbarer Elektronen pro Molekül im Erdgas durch. Damit lässt sich eine optimale Mischung zwischen dem Erdgas, dem weiteren Reaktanten und dem Abgas 26a aus der Abgasrückführung 24a bestimmen.

Die Steuer- und/oder Regeleinheit 22a steuert und/oder regelt den Verdichter 46a für das Erdgas. Die Steuer- und/oder Regeleinheit 22a steuert und/oder regelt ebenfalls das Ventil 48a für den weiteren Reaktanten. Ebenso steuert und/oder regelt die Steuer- und/oder Regeleinheit 22a den Verdichter 52a aus der Abgasrückführung 24a. Zur optimalen Regelung lassen sich in die Steuer- und/oder Regeleinheit 22a Werte über ein gewünschtes Sauerstoff-Kohlenstoff-Verhältnis und/oder über eine gewünschte Brenngasausnutzung eingeben. Es ist denkbar, dass die Steuer- und/oder Regeleinheit 22a das Ventil 38a zur Zuführung des Oxidationsgases regelt und/oder steuert. Dadurch könnte auch die Brennstoffzelleneinheit 10a durch die Steuer- und/oder Regeleinheit 22a zumindest teilweise gesteuert und/oder geregelt werden.

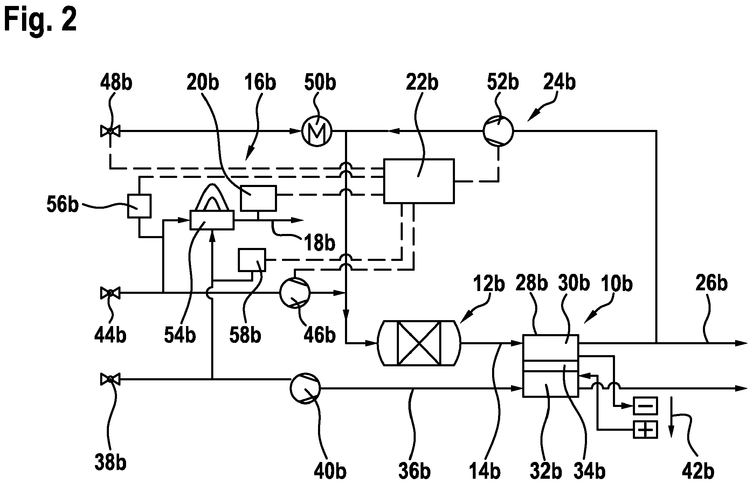

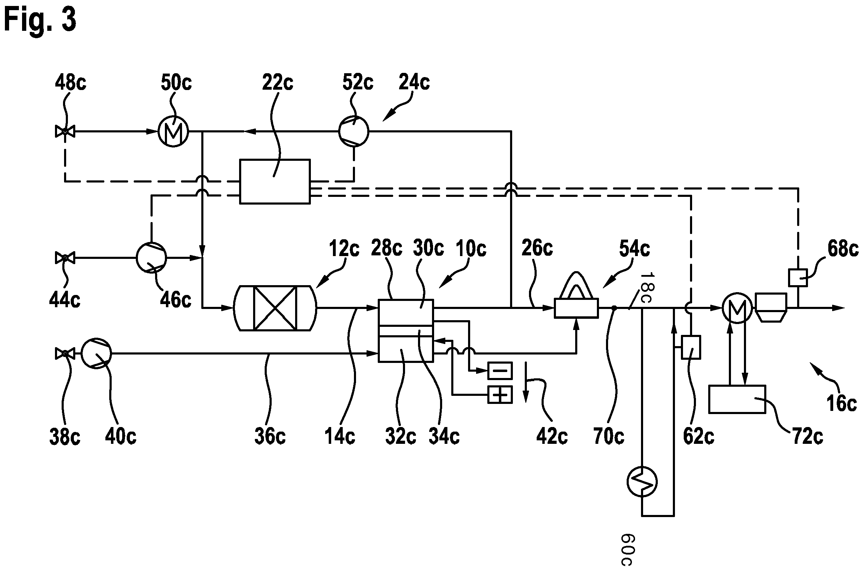

In den Figuren 2 und 3 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figur 1, verwiesen werden kann. Zur Unterscheidung der Ausführungsbeispiele ist der Buchstabe a den Bezugszeichen des Ausführungsbeispiels in der Figur 1 nachgestellt. In den Ausführungsbeispielen der Figuren 2 und 3 ist der Buchstabe a durch die Buchstaben b und c ersetzt.

Die Figur 2 zeigt ein weiteres Ausführungsbeispiel einer Brennstoffzellenvorrichtung mit einer Brennstoffzelleneinheit 10b und mit einer Reformereinheit 12b. Die Brennstoffzelleneinheit 10b weist eine Brennstoffzelle 28b auf. Die Reformereinheit 12b ist zur Erzeugung eines Synthesegases unter Verwendung von Erdgas und einem weiteren Reaktanten, insbesondere Sauerstoff und/oder Wasserdampf, vorgesehen. Die Reformereinheit 12b ist über eine Fluidverbindung 14b mit der Brennstoffzelleneinheit 10b verbunden.

Die Brennstoffzellenvorrichtung umfasst eine Sensoreinheit 16b. Die Sensoreinheit 16b ist dazu vorgesehen, in zumindest einem Betriebszustand zumindest eine Qualitätskenngröße des Erdgases zu erfassen. Genauer gesagt ist die Sensoreinheit 16b dazu vorgesehen, einen Sauerstoffanteil in einem Verbrennungsabgas 18b des Erdgases zu erfassen. Hierbei umfasst die Sensoreinheit 16b einen Sauerstoffsensor 20b. Der Sauerstoffsensor 20b ist von einer Lambdasonde gebildet. Das Verbrennungsabgas 18b stellt dabei ein Abgas aus einem Verbrennungsvorgang des Erdgases dar. Der Sauerstoffanteil kann hierbei auch als Restsauerstoffanteil verstanden werden.

Zum Aufheizen der Brennstoffzelleneinheit 10b auf eine Betriebstemperatur weist die Brennstoffzellenvorrichtung einen Brenner 54b auf. Der Brenner 54b verbrennt Erdgas mit Luft und erzeugt dabei das Verbrennungsabgas 18b. Der Sauerstoffsensor 20b ist teilweise innerhalb des Verbrennungsabgases 18b angeordnet.

Wie bereits ausgeführt, lässt sich die Qualität des verwendeten Erdgases an einer mittleren Anzahl Elektronen pro Molekül im Erdgas messen, die nach einer Reformierung durch die Reformereinheit 12b in der Brennstoffzelle 28b theoretisch maximal freigegeben werden können. Ein Zusammenhang zwischen dem Sauerstoffanteil des Verbrennungsabgases und der mittleren Anzahl freigebbarer Elektronen pro Molekül im Erdgas kann wie folgt beschrieben werden:

$$\overline{N}_{e^-}^{NG} = 6\overline{n} + 2x_{Alk}$$

Wobei $\overline{N}_{e^-}^{NG}$ die mittlere Anzahl freigebbarer Elektronen pro Molekül im Erdgas darstellt. $x_{Alk}$ ist die Summe aller Stoffmengenanteile der Alkane im Erdgas. Dabei ist $x_{Alk}$ ein fest einstellbarer Parameter. Besteht das Erdgas ausschließlich aus Alkanen, beträgt $x_{Alk}$ den Wert 1. $\overline{n}$ beschreibt eine mittlere Anzahl an Kohlenstoffatomen pro Alkan und kann wie folgt ermittelt werden:

$$\overline{n} = \frac{\dot{n}_{air}^{in} \cdot x_{O2}^{air,in} + \dot{n}_{NG}^{in} \cdot \left(x_{O2}^{NG,in} - 0.5 \cdot x_{Alk}\right) - x_{O2}^{out} \cdot \left(\dot{n}_{air}^{in} + \dot{n}_{NG}^{in} \cdot \left(1 - 0.5 \cdot x_{Alk}\right)\right)}{\dot{n}_{NG}^{in} \cdot x_{Alk} \cdot \left(0.5 \cdot x_{O2}^{out} + 1.5\right)}$$

Dabei beschreibt $x_{O2}^{NG,in}$ einen Stoffmengenanteil von Sauerstoff in für die Verbrennung verwendetem Erdgas. $x_{O2}^{air,in}$ beschreibt einen Stoffmengenanteil von Sauerstoff in für die Verbrennung verwendeter Luft. $\dot{n}_{air}^{in}$ beschreibt einen Stoffmengenfluss von für die Verbrennung verwendeter Luft. $\dot{n}_{NG}^{in}$ beschreibt einen Stoffmengenfluss von für die Verbrennung verwendetem Erdgas. $x_{O2}^{out}$ beschreibt einen Sauerstoffanteil im Verbrennungsabgas 18b. Die Stoffmengenflüsse können durch dem Fachmann als sinnvoll erscheinende Sensoren, wie insbesondere durch Ultraschalldurchflusssensoren, Thermische Massendurchflusssensoren und/oder Coriolis-Massendurchflusssensoren gemessen werden. Im gezeigten Ausführungsbeispiel umfasst die Sensoreinheit 16b einen Massendurchflusssensor 56b zur Messung des verbrauchten Erdgases. Ferner umfasst die Sensoreinheit 16b einen Massendurchflusssensor 58b zur Messung der verbrauchten Luft.

Der Sauerstoffanteil im Verbrennungsabgas 18b $x_{O2}^{out}$ wird wie oben beschrieben durch den Sauerstoffsensor 20b gemessen. Der Sauerstoffanteil $x_{O2}^{air,in}$ der zugeführten Luft kann prinzipiell als bekannt und konstant betrachtet werden. In einer trockenen Luft beträgt der Sauerstoffanteil $x_{O2}^{air,in}$ beispielsweise etwa 20,95 Vol.-%.

Die Brennstoffzellenvorrichtung weist eine Steuer- und/oder Regeleinheit 22b auf. Die Steuer- und/oder Regeleinheit 22b ist dazu vorgesehen, ein Sauerstoff-Kohlenstoff-Verhältnis innerhalb der Reformereinheit 12b in Abhängigkeit der Qualitätskenngröße des Erdgases einzustellen. In diesem Ausführungsbeispiel ist die Steuer- und/oder Regeleinheit 22b dazu vorgesehen, ein Sauerstoff-Kohlenstoff-Verhältnis innerhalb der Reformereinheit 12b in Abhängigkeit von dem Sauerstoffanteil $x_{O2}^{out}$ und den Stoffmengenflüssen $\dot{n}_{air}^{in}$ und $\dot{n}_{NG}^{in}$ einzustellen. Die Steuer- und/oder Regeleinheit 22b führt dazu zyklische Berechnungen der mittleren Anzahl freigebbarer Elektronen pro Molekül im Erdgas durch. Damit lässt sich eine optimale Mischung zwischen dem Erdgas, dem weiteren Reaktanten und dem Abgas 26b aus der Abgasrückführung 24b bestimmen.

Die Steuer- und/oder Regeleinheit 22b steuert und/oder regelt einen Verdichter 46b für eine Zuführung von Erdgas. Die Steuer- und/oder Regeleinheit 22b steuert und/oder regelt ebenfalls ein Ventil 48b für eine Zuführung des weiteren Reaktanten. Ebenso steuert und/oder regelt die Steuer- und/oder Regeleinheit 22b den Verdichter 52b aus der Abgasrückführung 24b. Zur optimalen Regelung lassen sich in die Steuer- und/oder Regeleinheit 22b Werte über ein gewünschtes Sauerstoff-Kohlenstoff-Verhältnis und/oder über eine gewünschte Brenngasausnutzung eingeben. Es ist denkbar, dass die Steuer- und/oder Regeleinheit 22b einen Verdichter 40b zur Zuführung des Oxidationsgases regelt und/oder steuert. Dadurch könnte auch die Brennstoffzelleneinheit 10b durch die Steuer- und/oder Regeleinheit 22b zumindest teilweise gesteuert und/oder geregelt werden.

In der Figur 3 ist ein weiteres Ausführungsbeispiel einer Brennstoffzellenvorrichtung mit einer Brennstoffzelleneinheit 10c und mit einer Reformereinheit 12c gezeigt. Die Brennstoffzelleneinheit 10c weist eine Brennstoffzelle 28c auf. Die Reformereinheit 12c ist zur Erzeugung eines Synthesegases unter Verwendung von Erdgas und einem weiteren Reaktanten, insbesondere Sauerstoff und/oder Wasserdampf, vorgesehen. Die Reformereinheit 12c ist über eine Fluidverbindung 14c mit der Brennstoffzelleneinheit 10c verbunden.

Die Brennstoffzellenvorrichtung weist einen Brenner 54c auf, welcher Abgase der Brennstoffzelleneinheit 10c verbrennt. Dabei reagiert aus der Brennstoffzelle 28c verbliebener Brennstoff, insbesondere Alkane und Kohlenstoffmonoxid insbesondere mit Sauerstoff, welches sich im Kathodenabgas befindet. Aus dem Brenner 54c tritt ein Verbrennungsabgas 18c aus. Zur Kühlung des Verbrennungsabgases 18c weist die Brennstoffzellenvorrichtung einen Wärmetauscher 60c auf. Der Wärmetauscher 60c kühlt das Verbrennungsabgas 18c bis zu einer Temperatur ab, bei welcher eine Kondensation noch nicht stattfindet.

Die Brennstoffzellenvorrichtung umfasst eine Sensoreinheit 16c. Die Sensoreinheit 16c ist dazu vorgesehen, in zumindest einem Betriebszustand zumindest eine Qualitätskenngröße des Erdgases zu erfassen. Genauer gesagt ist die Sensoreinheit 16c dazu vorgesehen, einen Kohlenstoffdioxidanteil im Verbrennungsabgas 18c der Brennstoffzelleneinheit 10c, insbesondere in einem Anodenabgas, zu erfassen. Die Sensoreinheit 16c ist ferner dazu vorgesehen, eine relative Feuchtigkeit in dem Verbrennungsabgas 18c zu erfassen. Die Sensoreinheit 16c ist ferner dazu vorgesehen, eine Temperatur des Verbrennungsabgases 18c zu erfassen. Die Sensoreinheit 16c ist ferner dazu vorgesehen, einen Druck des Verbrennungsabgases 18c zu erfassen.

Die relative Feuchtigkeit, die Temperatur und der Druck werden nach Abkühlung des Verbrennungsabgases 18c im Wärmetauscher 60c gemessen. Dazu umfasst die Sensoreinheit 16c einen ersten Abgassensor 62c. Der erste Abgassensor 62c misst die relative Feuchtigkeit im Verbrennungsabgas 18c vor Einsetzung einer Kondensation. Ferner misst der erste Abgassensor 62c den Druck und die Temperatur des Verbrennungsabgases 18c. Zur Durchführung der Messung des Kohlenstoffdioxidanteils im Verbrennungsabgas 18c, wird das Verbrennungsabgas 18c weiter abgekühlt. Dazu umfasst die Brennstoffzellenvorrichtung einen weiteren Wärmetauscher 64c, der thermische Energie 72c an einen nicht näher gezeigten Verbraucher und/oder an eine Umwelt abgibt. Dabei kondensiert Wasserdampf im Verbrennungsabgas 18c und wird in einer Kondensatfalle 66c gesammelt und abgeführt. Die Sensoreinheit 16c umfasst einen zweiten Abgassensor 68c. Der zweite Abgassensor 68c ist in eine Strömungsrichtung des Verbrennungsabgases 18c betrachtet hinter der Kondensationsfalle 64c angeordnet. Der zweite Abgassensor 68c misst ebenfalls die Temperatur und die Kohlenstoffdioxidkonzentration des Verbrennungsabgases 18c.

Wie bereits ausgeführt, lässt sich die Qualität des verwendeten Erdgases an einer mittleren Anzahl Elektronen pro Molekül im Erdgas messen, die nach einer Reformierung durch die Reformereinheit 12c in der Brennstoffzelle 28c theoretisch maximal freigegeben werden kann. Ein Zusammenhang zwischen dem Kohlenstoffdioxidanteil und der relativen Feuchtigkeit des Verbrennungsabgases 18c und der mittleren Anzahl freigebbarer Elektronen pro Molekül im Erdgas kann wie folgt beschrieben werden:

$$\overline{N}_{e^-}^{NG} = 6\overline{n} + 2x_{Alk}$$

Wobei $\overline{N}_{e^-}^{NG}$ die mittlere Anzahl freigebbarer Elektronen pro Molekül im Erdgas darstellt. $x_{Alk}$ ist die Summe aller Stoffmengenanteile der Alkane im Erdgas. Dabei ist $x_{Alk}$ ein fest einstellbarer Parameter. Besteht das Erdgas ausschließlich aus Alkanen, beträgt $x_{Alk}$ den Wert 1. n beschreibt eine mittlere Anzahl an Kohlenstoffatomen pro Alkan und wird wie folgt ermittelt:

$$\overline{n} = x_{Alk} \cdot \frac{x_{CO_2,1}}{x_{H_2O,1} - x_{CO_2,1}}$$

$x_{CO_2,1}$ beschreibt dabei einen rechnerischen Stoffmengenanteil von Kohlenstoffdioxid in einem ersten Messpunkt 70c und kann dabei aus den Messungen des ersten Abgassensors 62c und des zweiten Abgassensors 68c ermittelt werden:

$$x_{CO_2,1} = \left( 1 - \frac{x_{H_2O,1} - x_{H_2O,2}}{1 - x_{H_2O,2}} \right) \cdot x_{CO_2,2}$$

$x_{CO_2,2}$ ergibt sich dabei direkt aus der Messung des zweiten Abgassensors 68c. Der Stoffmengenanteil $x_{H_2O,1}$ im Messpunkt 70c ergibt sich aus:

$$x_{H_2O,1} = \frac{RH_3 \cdot P_{Sat,H_2O,3}(T_3)}{P_3}$$

Wobei $RH_3$ die vom ersten Abgassensor gemessene relative Feuchtigkeit beschreibt. $P_3$ beschreibt den vom ersten Abgassensor gemessenen Druck. $P_{Sat,H_2O,3}(T_3)$ beschreibt den Sättigungsdampfdruck am ersten Abgassensor 62c. Der Sättigungsdampfdruck ergibt sich aus der Antoine-Gleichung:

$$\log_{10}\left(P_{Sat,H_2O,2}\right) = A - \frac{B}{C + T_3}$$

Wobei A, B und C als Parameter festgelegt sind: A = 10,196, B =1730,63, C = -39,724. Diese Parameter gelten für eine gemessene Temperatur in Kelvin und einen gemessenen Druck in Pascal.

$x_{H_2O,2}$ beschreibt den Stoffmengenanteil von Wasserdampf am zweiten Abgassensor 68c. $x_{H_2O,2}$ lässt sich

$$x_{H_2O,2} = \frac{P_{Sat,H_2O,2}(T_2)}{P_2}$$

wie folgt ermitteln: Wobei $P_2$ als Atmosphärendruck angenommen werden kann. Der Sättigungsdampfdruck $P_{Sat,H_2O,2}(T_2)$ kann analog mit der oben genannten Antoine-Gleichung errechnet werden. Die Temperatur $T_2$ wird direkt vom zweiten Abgassensor 68c erfasst.

Die Brennstoffzellenvorrichtung weist eine Steuer- und/oder Regeleinheit 22c auf. Die Steuer- und/oder Regeleinheit 22c ist dazu vorgesehen, ein Sauerstoff-Kohlenstoff-Verhältnis innerhalb der Reformereinheit 12c in Abhängigkeit der Qualitätskenngröße des Erdgases einzustellen. In diesem Ausführungsbeispiel ist die Steuer- und/oder Regeleinheit 22c dazu vorgesehen, ein Sauerstoff-Kohlenstoff-Verhältnis innerhalb der Reformereinheit 12c in Abhängigkeit von den oben genannten Messungen des ersten Abgassensors 62c und des zweiten Abgassensors 68c einzustellen. Die Steuer- und/oder Regeleinheit 22c führt dazu zyklische Berechnungen der mittleren Anzahl freigebbarer Elektronen pro Molekül im Erdgas durch. Damit lässt sich eine optimale Mischung zwischen dem Erdgas, dem weiteren Reaktanten und dem Abgas 26c aus der Abgasrückführung 24c bestimmen.

Die Steuer- und/oder Regeleinheit 22c steuert und/oder regelt einen Verdichter 46c für eine Zuführung von Erdgas. Die Steuer- und/oder Regeleinheit 22c steuert und/oder regelt ebenfalls ein Ventil 48c für eine Zuführung des weiteren Reaktanten. Ebenso steuert und/oder regelt die Steuer- und/oder Regeleinheit 22c den Verdichter 52c aus der Abgasrückführung 24c. Zur optimalen Regelung lassen sich in die Steuer- und/oder Regeleinheit 22c Werte über ein gewünschtes Sauerstoff-Kohlenstoff-Verhältnis und/oder über eine gewünschte Brenngasausnutzung eingeben. Es ist denkbar, dass die Steuer- und/oder Regeleinheit 22c einen Verdichter 40c zur Zuführung des Oxidationsgases regelt und/oder steuert. Dadurch könnte auch die Brennstoffzelleneinheit 10c durch die Steuer- und/oder Regeleinheit 22c zumindest teilweise gesteuert und/oder geregelt werden.

**Patentansprüche**

1. Brennstoffzellenvorrichtung mit zumindest einer Brennstoffzelleneinheit (10a - 10c) und mit zumindest einer Reformereinheit (12a - 12c), welche zur Erzeugung zumindest eines Synthesegases unter Verwendung von Erdgas und zumindest einem weiteren Reaktanten, insbesondere Sauerstoff und/oder Wasserdampf, vorgesehen ist und welche über zumindest eine Fluidverbindung (14a - 14c) mit der zumindest einen Brennstoffzelleneinheit (10a - 10c) verbunden ist, mit zumindest einer Sensoreinheit (16a - 16c), die dazu vorgesehen ist, in zumindest einem Betriebszustand zumindest eine Qualitätskenngröße des Erdgases zu erfassen und mit zumindest eine Abgasrückführung (24a - 24c), die dazu vorgesehen ist, Abgas (26a - 26c) zur Vermischung mit dem Erdgas zurückzuführen, **gekennzeichnet durch** zumindest eine Steuer- und/oder Regeleinheit (22a - 22c), die dazu vorgesehen ist, ein Mischungsverhältnis zwischen dem Abgas (26a - 26c) und dem Erdgas in Abhängigkeit der Qualitätskenngröße des Erdgases einzustellen.

2. Brennstoffzellenvorrichtung nach Anspruch 1, **dadurch gekennzeichnet, dass** die zumindest eine Sensoreinheit (16a) dazu vorgesehen ist, zumindest einen Brennwert des zumindest einen Erdgases zu erfassen.

3. Brennstoffzellenvorrichtung nach Anspruch 1 oder 2, **dadurch gekennzeichnet, dass** die zumindest eine Sensoreinheit (16b) dazu vorgesehen ist, zumindest einen Sauerstoffgehalt in einem Verbrennungsabgas (18b) des Erdgases zu erfassen.

4. Brennstoffzellenvorrichtung nach Anspruch 3, **dadurch gekennzeichnet, dass** die Sensoreinheit (16b) zumindest einen Sauerstoffsensor (20b) umfasst.

5. Brennstoffzellenvorrichtung nach einem der vorhergehenden Ansprüche, **dadurch gekennzeichnet, dass** die zumindest eine Sensoreinheit (16c) dazu vorgesehen ist, zumindest einen Kohlenstoffdioxidanteil in einem Verbrennungsabgas (18c) des Erdgases zu erfassen.

6. Brennstoffzellenvorrichtung nach Anspruch 5, **dadurch gekennzeichnet, dass** die zumindest eine Sensoreinheit (16c) dazu vorgesehen ist, zumindest eine relative Feuchtigkeit in dem Verbrennungsabgas (18c) des Erdgases zu erfassen.

7. Brennstoffzellenvorrichtung nach einem der vorhergehenden Ansprüche, **gekennzeichnet durch** zumindest eine Steuer- und/oder Regeleinheit (22a - 22c), die dazu vorgesehen ist, ein Sauerstoff-Kohlenstoff-Verhältnis innerhalb der zumindest einen Reformereinheit (12a - 12c) in Abhängigkeit der Qualitätskenngröße des Erdgases einzustellen.

8. Verfahren zum Betrieb einer Brennstoffzellenvorrichtung (10a; 10b), insbesondere nach einem der vorhergehenden Ansprüche, mit zumindest einer Brennstoffzelleneinheit (10a - 10c) und mit zumindest einer Abgasrückführung (24a - 24c), die dazu vorgesehen ist, Abgas (26a - 26c) zur Vermischung mit einem Erdgas zurückzuführen, wobei eine Reformereinheit (12a - 12c) und/oder die Brennstoffzelleneinheit (10a - 10c) in Abhängigkeit von einer erfassten Qualitätskenngröße des verwendeten Erdgases betrieben wird, **dadurch gekennzeichnet, dass** ein Mischungsverhältnis zwischen dem Abgas (26a - 26c) und dem Erdgas in Abhängigkeit der Qualitätskenngröße des Erdgases eingestellt wird.

**Claims**

1. Fuel cell apparatus comprising at least one fuel cell unit (10a - 10c) and comprising at least one reformer unit (12a - 12c), which is intended for generating at least one syngas by using natural gas and at least one further reactant, in particular oxygen and/or hydrogen, and which is connected to the at least one fuel cell unit (10a - 10c) by way of at least one fluid connection (14a - 14c), comprising at least one sensor unit (16a - 16c), which is intended to detect at least one quality characteristic of the natural gas in at least one operating state, and comprising at least one exhaust gas return (24a - 24c), which is intended to return exhaust gas (26a - 26c) for mixing with the natural gas, **characterized by** at least one open-loop and/or closed-loop control unit (22a - 22c), which is intended to set a mixing ratio between the exhaust gas (26a - 26c) and the natural gas in dependence on the quality characteristic of the natural gas.

2. Fuel cell apparatus according to Claim 1, **characterized in that** the at least one sensor unit (16a) is intended to detect at least one calorific value of the at least one natural gas.

3. Fuel cell apparatus according to Claim 1 or 2, **characterized in that** the at least one sensor unit (16b) is intended to detect at least an oxygen content in a combustion exhaust gas (18b) of the natural gas.

4. Fuel cell apparatus according to Claim 3, **characterized in that** the sensor unit (16b) comprises at least one oxygen sensor (20b).

5. Fuel cell apparatus according to one of the preceding claims, **characterized in that** the at least one sensor unit (16c) is intended to detect at least one carbon dioxide component in a combustion exhaust gas (18c) of the natural gas.

6. Fuel cell apparatus according to Claim 5, **characterized in that** the at least one sensor unit (16c) is intended to detect at least one relative humidity in the combustion exhaust gas (18c) of the natural gas.

7. Fuel cell apparatus according to one of the preceding claims, **characterized by** at least one open-loop and/or closed-loop control unit (22a - 22c), which is intended to set an oxygen-carbon ratio within the at least one reformer unit (12a - 12c) in dependence on the quality characteristic of the natural gas.

8. Method for operating a fuel cell apparatus (10a; 10b), in particular according to one of the preceding claims, comprising at least one fuel cell unit (10a - 10c) and comprising at least one exhaust gas return (24a - 24c), which is intended to return exhaust gas (26a - 26c) for mixing with a natural gas, a reformer unit (12a - 12c) and/or the fuel cell unit (10a - 10c) being operated in dependence on a detected quality characteristic of the natural gas used, **characterized in that** a minimum ratio between the exhaust gas (26a - 26c) and the natural gas is set in dependence on the quality characteristic of the natural gas.

**Revendications**

1. Dispositif de pile à combustible comportant au moins une unité de pile à combustible (10a - 10c) et au moins une unité de reformage (12a - 12c) qui est prévue pour générer au moins un gaz de synthèse par utilisation de gaz naturel et d'au moins un autre réactif, notamment de l'oxygène et/ou de la vapeur d'eau, et qui est reliée par l'intermédiaire d'au moins une liaison fluidique (14a - 14c) à ladite au moins une unité de pile à combustible (10a - 10c), comportant au moins une unité de détection (16a - 16c) qui est prévue pour détecter, dans au moins un état de fonctionnement, au moins une grandeur de qualité du gaz naturel et comportant au moins un conduit de renvoi de gaz d'échappement (24a - 24c) qui est prévu pour renvoyer un gaz d'échappement (26a - 26c) afin de le mélanger au gaz naturel,
**caractérisé par** au moins une unité de commande et/ou de régulation (22a - 22c) qui est prévue pour régler un rapport de mélange entre le gaz d'échappement (26a - 26c) et le gaz naturel en fonction du paramètre de qualité du gaz naturel.

2. Dispositif de pile à combustible selon la revendication 1, **caractérisé en ce que** ladite au moins une unité de détection (16a) est prévue pour détecter au moins une valeur calorifique dudit au moins un gaz naturel.

3. Dispositif de pile à combustible selon la revendication 1 ou 2, **caractérisé en ce que** ladite au moins une unité de détection (16b) est prévue pour détecter au moins une teneur en oxygène dans un gaz d'échappement de combustion (18b) du gaz naturel.

4. Dispositif de pile à combustible selon la revendication 3, **caractérisé en ce que** l'unité de détection (16b) comprend au moins un capteur d'oxygène (20b).

5. Dispositif de pile à combustible selon l'une quelconque des revendications précédentes, **caractérisé en ce que** ladite au moins une unité de détection (16c) est prévue pour détecter au moins une fraction de dioxyde de carbone dans un gaz d'échappement de combustion (18c) du gaz naturel.

6. Dispositif de pile à combustible selon la revendication 5, **caractérisé en ce que** ladite au moins une unité de détection (16c) est prévue pour détecter au moins une humidité relative dans le gaz d'échappement de combustion (18c) du gaz naturel.

7. Dispositif de pile à combustible selon l'une quelconque des revendications précédentes, **caractérisé par** au moins une unité de commande et/ou de régulation (22a - 22c) qui est destinée à régler un rapport oxygène-carbone à l'intérieur de ladite au moins une unité de reformage (12a - 12c) en fonction de la grandeur de qualité du gaz naturel.

8. Procédé de mise en fonctionnement d'un dispositif de pile à combustible (10a ; 10b), en particulier selon l'une quelconque des revendications précédentes, comportant au moins une unité de pile à combustible et au moins une unité de renvoi des gaz d'échappement (24a - 24c) qui est destinée à renvoyer les gaz d'échappement (26a - 26c) pour les mélanger à un gaz naturel, dans lequel une unité de reformage (12a - 12c) et/ou l'unité de pile à combustible (10a - 10c) est mise en fonctionnement en fonction d'une grandeur de qualité détectée du gaz naturel utilisé, **caractérisé en ce qu'**un rapport de mélange entre le gaz d'échappement (26a - 26c) et le gaz naturel est réglé en fonction de la grandeur de qualité du gaz naturel.

# Fig. 1

Fig. 2

Fig. 3

**IN DER BESCHREIBUNG AUFGEFÜHRTE DOKUMENTE**

**In der Beschreibung aufgeführte Patentdokumente**

- JP 2007024511 A